# EUROPÄISCHE PATENTSCHRIFT

(11) **EP 3 332 278 B1**
(45) Veröffentlichungstag und Bekanntmachung des Hinweises auf die Patenterteilung: **29.01.2020**
(21) Anmeldenummer: 16753823.0
(22) Anmeldetag: 03.08.2016
(51) Int. Cl.: G02B 5/18, B42D 25/328, B42D 25/355, B42D 25/391

(54) **SICHERHEITSELEMENT**
SECURITY ELEMENT
ÉLÉMENT DE SÉCURITÉ

(30) Priorität: 07.08.2015 DE 102015010334
(43) Veröffentlichungstag der Anmeldung: 13.06.2018
(73) Patentinhaber: Giesecke+Devrient Currency Technology GmbH, 81677 München (DE)
(72) Erfinder: SCHINABECK, Josef, 82467 Garmisch-Partenkirchen (DE); SCHERER, Maik Rudolf Johann, 82491 Grainau (DE); LOCHBIHLER, Hans, 80337 München (DE)
(86) Internationale Anmeldenummer: PCT/EP2016/001333
(87) Internationale Veröffentlichungsnummer: WO 2017/025175

(56) Entgegenhaltungen:
- WO-A1-2014/023415
- WO-A1-2015/113718
- DE-A1-102013 105 246

## Beschreibung

Die Erfindung betrifft ein Sicherheitselement sowie ein Wertdokument mit einem solchen Sicherheitselement und ein Verfahren zum Herstellen.

Wertdokumente im Sinne der Erfindung sind unter anderem Banknoten, Aktien, Anleihen, Urkunden, Gutscheine, Schecks, Flugscheine, hochwertige Eintrittskarten, Etiketten zur Produktsicherung, Kredit- oder Geldkarten, aber auch andere fälschungsgefährdete Dokumente, wie Pässe, Ausweiskarten oder sonstige Ausweisdokumente.

Wertdokumente, insbesondere Banknoten, werden üblicherweise aus Papiersubstraten, Polymersubstraten oder Kombinationen aus Papier und Polymer gefertigt, die besondere Sicherheitselemente, wie z.B. einen zumindest teilweise in das Papier eingearbeiteten Sicherheitsfaden oder ein Wasserzeichen aufweisen. Als weiteres Sicherheitselement können so genannte Fensterfolien, Sicherheitsfäden, -bänder auf das Wertdokument aufgeklebt/laminiert oder eingebracht werden. Sicherheitselemente umfassen üblicherweise als Träger- bzw. Basismaterial ein Polymer oder Polymerzusammensetzungen. Typischerweise weisen Sicherheitselemente optisch variable Sicherheitsmerkmale wie Hologramme oder bestimmte Farbkippeffekte auf, um so eine bessere Fälschungssicherheit zu gewährleisten. Der besondere Vorteil von optisch variablen Sicherheitselementen ist, dass die Sicherheitsmerkmale auf diesen Sicherheitselementen nicht durch bloßes Kopieren mit Kopiergeräten nachgeahmt werden können, da Effekte eines optisch variablen Sicherheitsmerkmals durch das Kopieren verloren gehen oder sogar nur schwarz erscheinen.

WO 2014/023415 A1 verwendet zweidimensional periodisch, farbfilternde Gitter als Subwellenlängenanordnung. Ein Gitter, das in Aufsicht von Vorder- und Rückseite jeweils unterschiedliche Farbeindrücke vermittelt, wird in zwei Teilbereichen einer Informationsfläche zueinander gespiegelt verwendet, so dass in Aufsicht von beiden Seiten das gemeinsame Motiv der Teilbereiche erkennbar ist und in Durchsicht das Motiv aber nicht erkennbar ist.

WO 2015/113718 A1 zeigt eine asymmetrische plasmonische Struktur - mit zwei Teilbereichen in einer Informationsfläche. Die Struktur umfasst eine durchgehende Metallschicht mit zwei Metall-Dielektrikum-Grenzflächen und wird durch eine lokal aufgebrachte hoch- oder niederbrechende Zwischenschicht lokal modifiziert, so dass die lokale Modifikation in Aufsicht nur von der modifizierten Seite und in Transmission beidseitig sichtbar ist.

Es ist eine Aufgabe der vorliegenden Erfindung, ein Sicherheitselement bereitzustellen, welches einen hohen Fälschungsschutz aufweist und zugleich für einen Benutzer einfach und intuitiv überprüfbar ist.

Diese Aufgabe wird durch die Gegenstände der unabhängigen Ansprüche gelöst. Bevorzugte Ausführungsformen sind in den abhängigen Ansprüchen definiert.

Ein erster Aspekt der Erfindung betrifft ein Sicherheitselement mit
- einer ersten Informationsfläche, die eine erste Darstellung beinhaltet, wobei zumindest eine erste Subwellenlängenanordnung einen farbigen Bereich in der Darstellung bereitstellt, und
- einer zweiten Informationsfläche, die eine zweite Darstellung beinhaltet, wobei zumindest eine zweite Subwellenlängenanordnung einen farbigen Bereich in der Darstellung bereitstellt,
   wobei die Informationsflächen separat nebeneinander angeordnet sind, und
   - bei Betrachtung der Informationsflächen im Auflicht die erste Subwellenlängenanordnung und die zweite Subwellenlängenanordnung im Wesentlichen voneinander verschiedene Farben bzw. einen voneinander verschiedenen Farbeindruck aufweisen bzw. erzeugen und
   - bei Betrachtung der Informationsflächen im Durchlicht die erste Subwellenlängenanordnung und die zweite Subwellenlängenanordnung im Wesentlichen die gleichen Farben bzw. den gleichen Farbeindruck aufweisen bzw. erzeugen, wobei
   die erste Darstellung und die zweite Darstellung - unabhängig von der Betrachtungsseite - im Auflicht und im Durchlicht erkennbar sind und die Subwellenlängenanordnungen zweidimensional periodische, farbfilternde Gitter sind.

Das Sicherheitselement kann insbesondere ein Sicherheitsfaden, Aufreißfaden, Sicherheitsband, Sicherheitsstreifen, Patch oder Etikett sein. Das Sicherheitselement kann insbesondere auch zweiteilig oder mehrteilig ausgebildet sein. Im Fall eines zweiteiligen Sicherheitselements umfasst das Sicherheitselement zwei Teile zum Beispiel zwei Sicherheitsfäden, oder zwei Patches, oder einen Sicherheitsfaden und einen Patch, wobei ein Teil die erste Informationsfläche und der andere Teil die zweite Informationsfläche umfasst.

Vorzugsweise weisen bei Betrachtung der Informationsflächen im Auflicht die erste Subwellenlängenanordnung und die zweite Subwellenlängenanordnung im Wesentlichen komplementäre Farben bzw. Farbeindruck auf.

Vorzugsweise definiert das Sicherheitselement eine erste und eine zweite Hauptfläche, die einander gegenüberstehen. Betrachtet ein Betrachter das Sicherheitselement aus Richtung der ersten Hauptfläche im Auflicht, so nimmt er die voneinander verschiedenen Farbeindrücke der ersten Subwellenlängenanordnung und der zweiten Subwellenlängenanordnung wahr. Analoges trifft zu, wenn ein Betrachter das Sicherheitselement aus Richtung der zweiten Hauptfläche in Auflicht betrachtet. In anderen Worten kann der Effekt der voneinander verschiedenen Farbeindrücke unabhängig von der Betrachtungsrichtung /-seite wahrgenommen werden. Vorteilhafterweise ist es daher nicht erforderlich eine bestimmte Orientierung/ Ausrichtung des Sicherheitselements vorzunehmen, um die Echtheit überprüfen zu können.

Die Subwellenlängenanordnungen sind zweidimensional periodische, farbfilternde Gitter.

Insbesondere kann das mit dem Gitter versehene Sicherheitselement transparente Bereiche oder Ausnehmungen überspannen. Insbesondere werden solche Bereiche bzw. Ausnehmungen im Weiteren auch als Fenster bezeichnet.

Insbesondere kann ein zweidimensional periodisches, farbfilternde Gitter, wie folgt, gestaltet sein:

Ein zweidimensional periodisches, farbfilterndes Gitter, das eine zusammenhängende hochbrechende, insbesondere metallische, Grundschicht, die eine Gitterebene definiert, und über der Grundschicht ein zweidimensional regelmäßiges Muster aus einzelnen hochbrechenden, insbesondere metallischen Flächenelementen aufweist, die sich jeweils parallel zur Gitterebene erstrecken und jeweils von der Grundschicht durch ein Zwischen-Dielektrikum um einen Abstand beabstandet sind, der größer ist als die Dicke der Grundschicht und der Flächenelemente, wobei das regelmäßige Muster in mindestens zwei Richtungen, die parallel zur Gitterebene verlaufen, eine Periodizität zwischen 100 nm und 800 nm, bevorzugt zwischen 200 nm und 500 nm hat.

Das Gitter sieht eine hochbrechende Grundschicht sowie hochbrechende Flächenelemente, die über der Grundschicht angeordnet sind, vor. Die hochbrechende Eigenschaft der Grundschicht bzw. der Flächenelemente wird durch eine geeignete Materialwähl erreicht. Neben Metall als Material kommen dabei insbesondere Silizium, Zinksulfid oder Titandioxid infrage. In dieser Beschreibung wird der Begriff "metallisch" als gleichbedeutend mit "hochbrechend" aufgefasst, soweit nicht ausdrücklich anderes beschrieben ist.

Wesentlich für die Wirkung des Gitters ist es, dass über einer zusammenhängenden metallischen Schicht nicht zusammenhängende, in einem Muster angeordnete Flächenelemente angeordnet sind. Wenn ein zweidimensional periodisches Gitter mit einem Profil, das senkrechte Flanken besitzt, senkrecht metallisch bedampft wird, entsteht ein nicht geschlossener Metallfilm auf Plateaus an der Gitteroberseite. Es bildet sich auf der unteren Gitterfläche (Grundschicht) ein zusammenhängender Metallfilm aus. Die Erhebungen des Profils sind dabei nur auf den Plateaus metallisch überzogen.

Die unbedampfte Gitterstruktur besteht dabei aus einem dielektrischen Material, welches z. B. eine Brechzahl von etwa 1,5 aufweist. Dabei eignen sich besonders Kunststofffolien, z. B. PET-Folien, als Substrat. Die eigentliche Basisstruktur ist z. B. ebenfalls in Kunststoff, bevorzugt UV-Lack, ausgebildet. Nach der Bedampfung wird schließlich die Struktur mit UV-Lack oder lösemittelbasierten Lack aufgefüllt und optional mit einer Deckfolie kaschiert. Somit liegt ein Schichtaufbau vor, bei dem die Ober- und die Unterseite im Wesentlichen dieselbe Brechzahl besitzt.

Ferner ist die Beschichtung nicht nur auf einfache metallische Schichten beschränkt. Es sind auch Mehrfachschichten, insbesondere Trilayer denkbar. Es ist bekannt, dass mehrfach beschichtete eindimensional periodische Gitter eine starke Farbfilterfilterung durch die Ausbildung von Fabry-Perot Resonatoren sowohl in Reflexion als auch in Transmission ermöglichen. Bei Trilayer sind folgende Schichten besonders bevorzugt: zwei halbtransparente Metallschichten mit einer dazwischen liegenden dielektrischen Abstandsschicht bzw. zwei hochbrechende Schichten mit einer dazwischen liegenden niedrigbrechenden Schicht. Für die Metallschichten kommen folgende Materialien infrage: Al, Ag, Pt, Pd, Au, Cu, Cr und Legierungen davon. Als hochbrechende Schichten eignen sich beispielsweise ZnS, ZnO, TiO₂, ZnSe, SiO, Ta₂O₅ oder Silizium. Als niedrigbrechende Schichten bieten sich SiO₂, Al₂O₃ bzw. MgF₂ an.

Bei einem besonders zweckmäßigen Herstellverfahren wird zuerst ein Dielektrikum als Basisstruktur geeignet strukturiert und dann beschichtet. Dann hat die Grundschicht im Bereich unter jedem Flächenelement eine Öffnung. Dies ist zugleich vorteilhaft, da dann auch in Transmission ein optischer Effekt entsteht.

Es ist bevorzugt, dass das Gitter in ein Einbett-Dielektrikum eingebettet ist, welches vorzugsweise dieselbe Brechzahl hat wie das Dielektrikum, welches die Basisstruktur bildet und die Grundschicht von den Flächenelementen beabstandet. Die Brechzahl kann beispielsweise zwischen 1,4 und 1,6 liegen.

Es zeigte sich, dass die Farbeffekte des zweidimensionalen farbfilternden Gitters von der Periodizität des Musters abhängen. Dies kann dazu ausgenutzt werden, farbige Symbole bzw. Bilder zu erzeugen. Dazu kann der Flächenfüllfaktor und/oder der Abstand zwischen Flächenelementen und Grundschicht lokal variiert werden. Insbesondere ist es möglich, eine Gruppe mehrerer Flächenelemente mit identischen Abmessungen so zu gestalten, dass ein gewünschter Farbeffekt eintritt. Diese Gruppe bildet dann ein Sub-Pixel. Mehrere Sub-Pixel werden mit unterschiedlichen Farbeigenschaften durch entsprechende geometrische Gestaltung ausgestaltet und dann zu einem Pixel zusammengefasst. Dies erlaubt eine farbige Bilddarstellung. Die unterschiedlichen Farben können dabei durch die entsprechende lokale Variation eines oder mehrerer der Parameter des Gitters (Abstand der Flächenelemente in zwei Raumrichtungen sowie Abstand der Flächenelemente von der Grundschicht) variiert werden.

Durch die pixelweise Farbmischung von Basisfarben, z. B. RGB-Farben, in Sub-Pixelbereichen können Echtfarbenbilder hergestellt werden. Der Vorteil von solchen Strukturen gegenüber der herkömmlichen Drucktechnik ist, dass hierbei eine sehr feine Strukturierung bis in den Mikrometerbereich vorgenommen werden kann. Diese Feinstrukturierung eignet sich besonders für Anwendungen in Moire-Vergrößerungsanordnungen, z. B. indem das Gitter so ausgebildet ist, dass es Mikrobilder für Moire-Vergrößerungsanordnungen bereitstellt. Bei Mikrolinsenanordnungen wirkt sich die große Winkeltoleranz der oben beschriebenen zweidimensional periodischen Gitter sehr vorteilhaft aus, denn die Mikrolinsen haben bei Moire-Vergrößerungsanordnungen eine kleine Brennweite bei einem relativ großen Öffnungsverhältnis. Daher zeigen die hier beschriebenen Strukturen eine größere Farbsättigung in der Kombination mit Mikrolinsen als bisher bekannte eindimensional periodische Subwellenlängenstrukturen.

Im Hinblick auf die vorstehenden Ausführungen wird auf die Druckschrift WO 2012/156049 A1 verwiesen. Zu weiteren Ausführungsformen. eines zweidimensional periodischen, farbfilternden Gitters wird weiterhin auch auf die Druckschrift WO 2014/023415 A1 verwiesen. Der Inhalt dieser Druckschriften wird explizit hinsichtlich der Ausgestaltung und Herstellung eines zweidimensional periodischen, farbfilternden Gitters aufgenommen.

Vorzugsweise sind zumindest die erste Subwellenlängenanordnung und die zweite Subwellenlängenanordnung in entgegengesetzte Richtungen ausgerichtet.

Insbesondere vorzugsweise sind zumindest die erste Subwellenlängenanordnung und die zweite Subwellenlängenanordnung in entgegengesetzte Richtungen bezogen auf eine Bezugsebene ausgerichtet. Insbesondere ist darunter zu verstehen, dass die Erhebungen des Profils bzw. Plateaus der ersten Subwellenlängenanordnung entgegengesetzt zu den Erhebungen des Profils bzw. Plateaus der zweiten Subwellenlängenanordnung ausgerichtet sind. Insbesondere ist eine Bezugsebene eine (virtuelle) Mittelebene zwischen der ersten und der zweiten Hauptfläche des Sicherheitselements.

Insbesondere vorzugsweise ist die erste Subwellenlängenanordnung in Richtung der ersten Hauptfläche des Sicherheitselements ausgerichtet, während die zweite Subwellenlängenanordnung in Richtung der zweiten Hauptfläche des Sicherheitselements ausgerichtet ist.

Vorzugsweise weisen die erste Subwellenlängenanordnung und die zweite Subwellenlängenanordnung gleiche Strukturen auf, dass heißt im Wesentlichen identische zweidimensionale periodische, farbfilterende Gitter. Eine unterschiedliche Farbe der ersten Subwellenlängenanordnung im Vergleich zur zweiten Subwellenlängenanordnung bei Betrachtung im Auflicht wird dadurch erhalten, dass die beiden Subwellenlängenanordnungen in entgegengesetzte Richtungen bezogen auf eine Bezugsebene ausgerichtet sind.

Subwellenlängenanordnungen, insbesondere zweidimensional periodische, farbfilterende Gitter, sind vorteilhaft für die Verwendung als Sicherheitsmerkmal, da die Farbe bzw. der Farbeindruck, den die Subwellenlängenanordnung bei der Betrachtung im Auflicht erzeugt, davon abhängt, von welcher Seite die Subwellenlängenanordnung betrachtet wird. Die Subwellenlängenanordnung spannt eine Ebene auf, die von einer Vorderfläche (Gitteroberseite) und einer Rückfläche (unteren Gitterfläche, Grundschicht) bzw. zwei Seiten betrachtet werden kann. Im Auflicht erscheint die Subwellenlängenanordnung bei Betrachtung von der Vorderfläche bzw. der einen Seite in einer anderen Farbe als bei Betrachtung von der Rückfläche bzw. der anderen Seite. Hingegen kann bei Betrachtung im Durchlicht eine Farbe bzw. Farbeindruck wahrgenommen werden, die/der unabhängig davon ist, ob von der Vorderfläche oder der Rückfläche auf die Subwellenlängenanordnung geblickt wird.

Vorteilhafterweise kann der optische Effekt, dass Subwellenlängenanordnungen im Auflicht je nach Betrachtung von der Vorderfläche oder Rückfläche voneinander verschiedene Farben/Farbeindrücke aufweisen und zusätzlich auch noch bei Betrachtung im Durchlicht eine bestimmte Farbe aufweist, die unabhängig von der Betrachtungsseite (Vorderfläche, Rückfläche) ist, nicht durch Druckfarben oder ähnliches imitiert werden. Somit ist ein Sicherheitselement mit Subwellenlängenanordnung besonders gut gegen Fälschung geeignet, da nur durch eine Subwellenlängenanordnung, die vorher beschriebenen Farbeeffekte bei verschiedenen Betrachtungssituationen erzeugbar sind.

Zur Überprüfung der Echtheit eines Sicherheitselements ist es besonders vorteilhaft eine erste Informationsfläche und eine zweite Informationsfläche bereitzustellen, die jeweils Subwellenlängenanordnungen umfassen, und wobei die Informationsflächen nebeneinander angeordnet sind, und - bei Betrachtung der Informationsflächen im Auflicht die erste Subwellenlängenanordnung und die zweite Subwellenlängenanordnung im Wesentlichen einen komplementäre Farben bzw. Farbeindruck aufweisen. Dies ist insbesondere deshalb vorteilhaft, da ein Betrachter bereits bei Betrachtung einer der Hauptflächen des Sicherheitselements sofort die verschiedenden Farben der Subwellenlängenanordnungen der beiden Informationsflächen wahrnimmt, und somit die Funktionalität des Sicherheitselements leichter verständlich ist. Zudem regt diese Anordnung den Betrachter/Benutzer an, das Sicherheitselement auch von der anderen Hauptfläche zu betrachten. Hierbei wird der Benutzer feststellen, dass sich die von einer Subwellenlängenanordnung erzeugte Farbe ebenfalls ändert, wenn diese Subwellenlängenanordnung von der anderen Hauptfläche her betrachtet wird.

Weiterhin vorzugsweise weist die erste Informationsfläche zusätzlich zu der ersten Subwellenlängenanordnung weitere voneinander verschiedene Subwellenlängenanordnungen auf.

Weiterhin vorzugsweise weist die zweite Informationsfläche zusätzlich zu der zweiten Subwellenlängenanordnung weitere voneinander verschiedene Subwellenlängenanordnungen auf.

Weiterhin bevorzugt weisen die weiteren voneinander verschiedenen Subwellenlängenanordnungen der ersten Informationsfläche und der zweiten Informationsfläche bei Betrachtung im Auflicht im Wesentlichen voneinander verschiedene Farben/einen unterschiedlichen Farbeindruck auf. Insbesondere können die weiteren voneinander verschiedenen Subwellenlängenanordnungen der ersten Informationsfläche und der zweiten Informationsfläche bei Betrachtung im Auflicht im Wesentlichen komplementäre Farben/Farbeindruck aufweisen.

Weiterhin bevorzugt weisen die weiteren voneinander verschiedenen Subwellenlängenanordnungen der ersten Informationsfläche und der zweiten Informationsfläche bei Betrachtung im Durchlicht im Wesentlichen die gleiche Farbe/Farbeindruck auf.

Vorzugsweise weisen die erste Darstellung und die zweite Darstellung gleiche Konturverläufe auf. Vorzugsweise weisen bei Betrachtung im Durchlicht die erste Darstellung und die zweite Darstellung die gleichen Farben/Farbeindrücke auf, während die erste Darstellung und die zweite Darstellung bei Betrachtung im Auflicht voneinander verschiedene Farben/Farbeindrücke aufweisen.

Insbesondere weisen im Falle gleicher Konturverläufe gleiche Darstellungsbereiche im Durchlicht gleiche Farben/ Farbeindrücke auf, während gleiche Darstellungsbereiche im Auflicht unterschiedliche bzw. voneinander verschiedene Farben/Farbeindrücke aufweisen.

Vorzugsweise weisen die erste Darstellung und die zweite Darstellung voneinander verschiedene Konturverläufe auf. Vorzugsweise weisen bei Betrachtung im Durchlicht die erste Darstellung und die zweite Darstellung die gleichen Farben/Farbeindrücke auf, und bei Betrachtung im Auflicht weisen die erste Darstellung und die zweite Darstellung voneinander verschiedene Farben/Farbeindrücke auf.

Insbesondere weisen im Falle verschiedener Konturverläufe unterschiedliche Darstellungsbereiche im Durchlicht gleiche Farben/Farbeindrücke auf, während diese Darstellungsbereiche im Auflicht unterschiedliche bzw. voneinander verschiedene Farben/Farbeindrücke aufweisen.

Vorzugsweise umfasst das Sicherheitselement ein Trägersubstrat. Das Trägersubstrat ist vorzugsweise zumindest im Bereich der Informationsflächen transparent bzw. transluzent. Das Trägersubstrat weist eine erste und eine zweite Hauptfläche aufweist, die einander gegenüberstehen. Vorzugsweise ist die erste Subwellenlängenanordnung auf der ersten Hauptfläche angeordnet und die zweite Subwellenlängenanordnung ist auf der zweiten Hauptfläche angeordnet. Alternativ sind die erste und die zweite Subwellenlängenanordnung auf der gleichen Hauptfläche angeordnet.

Vorzugsweise ist das Trägersubstrat eine Trägerfolie. Besonders bevorzugt beinhaltet das Trägersubstrat Polyethylenterephthalat (PET) und/oder Polypropylen (PP), besonders bevorzugt ist das Trägersubstrat aus PET oder PP.

Bevorzugt weist das Sicherheitselement eine Prägeschicht und eine Metallisierung für die erste Subwellenlängenanordnung auf. Bevorzugt weist das Sicherheitselement eine Prägeschicht und eine Metallisierung für die zweite Subwellenlängenanordnung auf.

Vorzugsweise weist das Sicherheitselement für die erste Subwellenlängenanordnung und die zweite Subwellenlängenanordnung eine (gemeinsame) Prägeschicht und eine (gemeinsame) Metallisierung auf. Dies ist beispielsweise der Fall, wenn die erste Subwellenlängenanordnung und die zweite Subwellenlängenanordnung auf der gleichen Hauptfläche angeordnet sind.

Vorzugsweise umfasst die erste Darstellung und/oder die zweite Darstellung weitere Subwellenlängenanordnungen, die keine farbfilternden Eigenschaften aufweisen, wie Mottenaugenstrukturen.

Ein weiterer Aspekt betrifft ein Wertdokument, insbesondere Banknote, mit einem Wertdokumentsubstrat, das eine erste Hauptfläche und eine zweite Hauptfläche aufweist, wobei sich die erste und die zweite Hauptfläche gegenüberstehen, und zumindest einem Sicherheitselement, welches eine oder mehrere der vorher beschriebenen Aspekte aufweist.

Ein Sicherheitselement wird vorzugsweise auf bzw. in ein Wertdokumentsubstrat auf-/ eingebracht. Ein Wertdokumentsubstrat kann Papier, Polymer oder eine Papier-Polymer-Kombination aufweisen. Bei einer Banknote aus Polymer oder einer Papier-Polymer-Kombination als Wertdokumentsubstrat kann das Trägersubstrat des Sicherheitselements ein Teilbereich des Wertdokumentsubstrats sein. Beispielsweise kann das Wertdokumentsubstrat eine Polymerfolie sein und das Trägersubstrat des Sicherheitselements ist ein Teilbereich dieser Polymerfolie. Das Wertdokumentsubstrat ist vorzugsweise ein transparentes synthetisches Polymer. Insbesondere ist unter dem Begriff "Papier" natürliches Polymer, wie Baumwolle, zu verstehen. Insbesondere ist unter dem Begriff "Polymer" synthetisches Polymer, wie PET, zu verstehen.

Ist das Sicherheitselement in ein Wertdokumentsubstrat eingebettet, verlaufen die Oberseite und die Unterseite des Sicherheitselements vorzugsweise (im Wesentlichen) parallel zu der Oberseite und Unterseite des Wertdokumentsubstrats. Die Oberseite und Unterseite des Wertdokuments sowie die des Sicherheitselements können auch als Hauptflächen bezeichnet werden. Diese Hauptflächen geben relevante Informationen an einen Betrachter wieder. Folglich sind die Hauptflächen für einen Betrachter, der ein Wertdokument mit einem Sicherheitselement betrachtet sichtbar. Zum Beispiel kann eine Hauptfläche einer Banknote den Wert der Banknote sowie dessen Seriennummer wiedergeben. Entsprechend kann eine Ober- und Unterseite eines Sicherheitselements ebenso wie die eines Wertdokuments auch als erste und zweite Hauptfläche angesehen werden.

Insbesondere sind die Informationsflächen des erfindungsgemäßen Sicherheitselements freigegeben, so dass diese für einen Betrachter sichtbar sind, selbst wenn das Sicherheitselement in das Wertdokumentsubstrat eingebettet, d.h. bereichsweise eingeschlossen ist.

Vorzugsweise bildet die erste Hauptfläche die Vorderseite des Wertdokuments. Vorzugsweise bildet die zweite Hauptfläche die Rückseite des Wertdokuments. Vorzugsweise ist die erste Subwellenlängenanordnung auf der Vorderseite angeordnet und die zweite Subwellenlängenanordnung auf der Rückseite angeordnet.

Vorzugsweise ist die erste Informationsfläche in einem ersten Fenster angeordnet. Vorzugsweise ist die zweite Informationsfläche in einem zweiten Fenster angeordnet.

Insbesondere ist unter einem Fenster ein Bereich zu verstehen, der transparent oder transluzent ist.

Ein Fenster kann zum Beispiel als Aussparung bzw. Durchbrechung in einem Wertdokumentsubstrat vorgesehen sein. Alternativ kann ein Fenster auch als transparenter bzw. transluzenter Bereich in einem transparenten/ transluzenten Wertdokumentsubstrat vorgesehen sein.

Insbesondere hat der Begriff "Fenster" im Fachgebiet der Wertdokumente und Sicherheitselemente eine allgemein anerkannte Bedeutung, auf die hier verwiesen wird.

Vorzugsweise umfasst das Sicherheitselement zwei voneinander separate Trägersubstrate, nämlich ein erstes Trägersubstrat und ein zweites Trägersubstrat. Das erste und zweite Trägersubstrat sind vorzugsweise zumindest im Bereich der Informationsflächen transparent oder transluzent. Das erste Trägersubstrat weist die erste Informationsfläche auf und das zweite Trägersubstrat weist die zweite Informationsfläche auf.

Vorzugsweise ist das Wertdokumentsubstrat selbst das Trägersubstrat für die ersten und den zweiten Informationsfläche.

Ein weiterer Aspekt betrifft ein Verfahren zur Herstellung eines Sicherheitselements umfassend die Schritte:
- Bereitstellen eines Trägersubstrats;
- Erzeugen einer Reihe von Subwellenlängenanordnungen einer ersten Informationsfläche auf dem Trägersubstrat;
- Erzeugen einer Reihe von Subwellenlängenanordnungen einer zweiten Informationsfläche auf dem Trägersubstrat; und
- Applizieren der ersten Informationsfläche und der zweiten Informationsfläche auf einem Wertdokumentsubstrat.

Vorzugsweise werden die erste Informationsfläche auf der ersten Hauptfläche eines Wertdokumentsubstrats und die zweite Informationsfläche auf der zweiten Hauptfläche des Wertdokumentsubstrats appliziert.

Alternativ werden die erste Informationsfläche und die zweite Informationsfläche auf der gleichen Hauptfläche appliziert.

Vorzugsweise wird das Verfahren in einem Rolle-zu-Rolle-Verfahren durchgeführt.

Vorzugsweise umfasst das Verfahren den Schritt:
Teilen des Trägersubstrats in mindestens zwei Bahnen, wobei eine Bahn die Subwellenlängenanordnungen einer ersten Informationsfläche umfasst, und die andere Bahn die Subwellenlängenanordnungen einer zweiten Informationsfläche umfasst.

Vorzugsweise umfasst das Verfahren den Schritt:
Applizieren einer ersten Informationsfläche auf einer Hauptfläche eines Wertdokumentsubstrats.

Vorzugsweise umfasst das Verfahren den Schritt:
Applizieren einer zweiten Informationsfläche auf einer Hauptfläche des gleichen Wertdokumentsubstrats.

Die Erfindung wird nachstehend anhand von bevorzugten Ausführungsformen in Verbindung mit den beigefügten Figuren erläutert, bei deren Darstellung auf eine maßstabs- und proportionsgetreue Wiedergabe verzichtet wurde, um die Anschaulichkeit zu erhöhen.

Es zeigen:
- Fig. 1a,: eine schematische Darstellung eines Sicherheitselements in Draufsicht gemäß einer Variante;
- Fig.1b: eine schematische Schnittdarstellung entlang I-I des Sicherheitselements gemäß Fig. 1a;
- Fig. 2: eine schematische Darstellung eines Sicherheitselements in Draufsicht gemäß einer weiteren Variante;
- Fig. 3a: eine schematische Darstellung eines Wertdokuments mit Sicherheitselement in Draufsicht gemäß einer Variante;
- Fig. 3b: eine schematische Schnittdarstellung entlang I-I des Wertdokuments gemäß Fig. 3a nach einer Variante;
- Fig. 3c: eine schematische Schnittdarstellung entlang I-I des Wertdokuments gemäß Fig. 3a mit Sicherheitselement nach einer weiteren Variante;
- Fig. 4a, b: eine schematische Darstellung zur Herstellung von Sicherheitselementen;
- Fig.5: eine schematische Darstellung eines zweidimensionalen periodischen Gitters als Subwellenlängenanordnung; und
- Fig. 6a,b: eine schematische Darstellung von ersten und zweiten Subwellenlängenanordnungen.

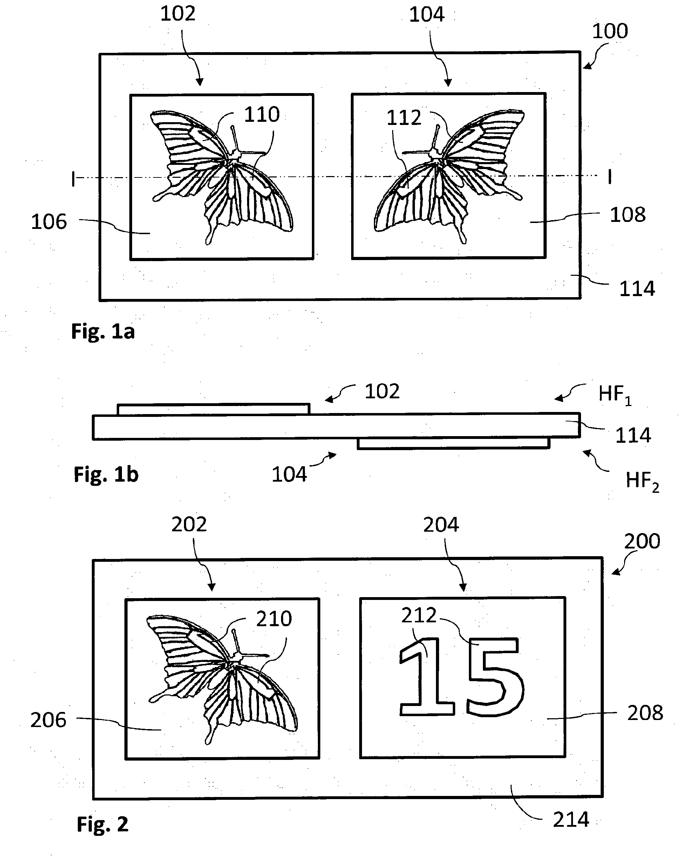

**Fig. 1a** zeigt eine schematische Darstellung eines Sicherheitselements 100 in Draufsicht. Das Sicherheitselement 100 umfasst eine erste Informationsfläche 102, die eine erste Darstellung beinhaltet. Die erste Darstellung umfasst ein Bild eines Schmetterlings, der aus Konturen und mehreren Bereichen besteht, und einem Hintergrund 106. Weiterhin umfasst das Sicherheitselement 100 eine zweite Informationsfläche 104, die eine zweite Darstellung beinhaltet. Die zweite Darstellung umfasst das Bild eines Schmetterlings, der aus Konturen und einer Vielzahl von Bereichen besteht, und einer Umgebung 108. Weiterhin umfasst das Sicherheitselement 100 ein Trägersubstrat 114. Die erste Darstellung enthält die Bereiche 110, welche eine erste Subwellenlängenanordnung (nicht gezeigt) aufweisen. Die zweite Darstellung umfasst die Bereiche 112, die eine zweite Subwellenlängenanordnung umfassen. Wie aus Fig. 1a ersichtlich ist, sind die erste Informationsfläche 102 und die zweite Informationsfläche 104 nebeneinander angeordnet. Bei gleichzeitiger Betrachtung der Informationsflächen 102 und 104 im Auflicht nimmt ein Betrachter die Bereiche 110 im Vergleich zu den Bereichen 112 als verschiedenfarbig wahr. In anderen Worten weisen die erste Subwellenlängenanordnung und die zweite Subwellenlängenanordnung der Bereiche 110,112 im Wesentlich voneinander verschiedene Farben auf, wenn eine Betrachtung im Auflicht (Reflexion) stattfindet. Hingegen erscheinen bei Betrachtung der Informationsflächen 102,104 im Durchlicht die Bereiche 110 und 112 im Wesentlichen gleichfarbig. In anderen Worten erzeugt die erste Subwellenlängenanordnung und die zweite Subwellenlängenanordnung die gleichen Farben, wenn die Informationsflächen 102,104 im Durchlicht betrachtet werden. Unabhängig davon, ob die Informationsflächen 102 und 104 im Auflicht oder im Durchlicht betrachtet werden, sind die erste und zweite Darstellung, d.h. die Schmetterlinge, erkennbar.

**Fig. 1b** eine schematische Schnittdarstellung entlang der Schnittlinie I-I des Sicherheitselements 100 gemäß Fig. 1a. Hierbei ist anzumerken, dass der in Fig. 1b gezeigte Aufbau bzw. Anordnung lediglich als exemplarisch anzusehen ist. Entsprechend ist es möglich, dass auch andere Aufbauten, die gleiche, wie zu Fig. 1a beschriebene, Funktion erfüllen können. Fig. 1b zeigt das Trägersubstrat 114, welches eine erste Hauptfläche HF₁ und eine zweite Hauptfläche HF₂ aufweist. Die erste Hauptfläche HF₁ und die zweite Hauptfläche HF₂ stehen einander gegenüber. Die Informationsfläche 102 ist an bzw. auf der ersten Hauptfläche HF₁ angeordnet. Die zweite Informationsfläche 104 ist auf der zweiten Hauptfläche HF₂ angeordnet.

**Fig. 2** zeigt eine weitere Variante eines Sicherheitselements 200, welches einen ersten Informationsbereich 202 und einen zweiten Informationsbereich 204 aufweist. Der erste Informationsbereich 202 umfasst eine erste Darstellung, die einen Schmetterling und einen Hintergrund 206 beinhaltet. In dem Schmetterling sind Bereiche 210 vorgesehen, die Subwellenlängenanordnungen enthalten. Der zweite Informationsbereich 204 weist eine zweite Darstellung auf, die die Zahl "15" und den Hintergrund 208 beinhaltet. Die Bereiche 212 beinhalten Subwellenlängenanordnungen. Das Sicherheitselement 200 umfasst ein Trägersubstrat 214 in/auf dem die Informationsflächen 202 und 204 vorgesehen sind. Die erste Darstellung und die zweite Darstellung weisen voneinander verschiedene Konturverläufe auf, wobei bei Betrachtung im Durchlicht die erste Darstellung und die zweite Darstellung die gleichen Farben aufweisen, und bei Betrachtung im Auflicht die erste Darstellung und die zweite Darstellung voneinander verschiedene Farben aufweisen. Insbesondere trifft dies auf die Bereiche 210 der ersten Darstellung und die Bereiche 212 der zweiten Darstellung zu. Weiterhin können der Hintergrund 206 und der Hintergrund 208 Subwellenlängenanordnungen aufweisen, so dass auch diese beiden Bereiche im Durchlicht die gleichen Farben und im Auflicht voneinander verschiedene Farben aufweisen. Die Subwellenlängenanordnungen der Hintergründe 206, 208 kann von denen in den Bereichen 210, 212 verschieden sein.

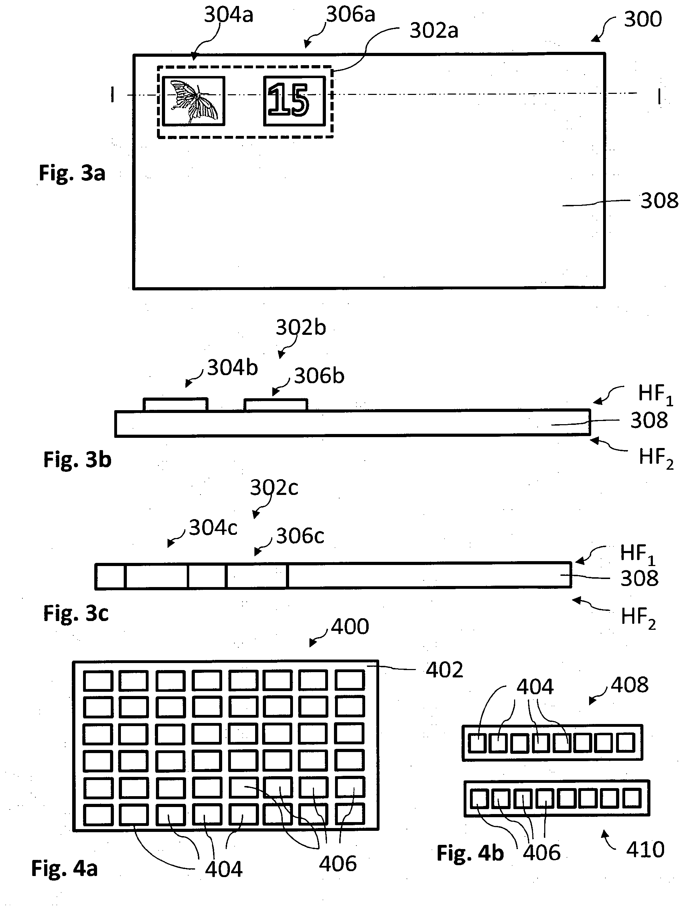

**Fig. 3a** zeigt ein Wertdokument 300, welches ein Wertdokumentsubstrat 308 und mindestens ein Sicherheitselement 302 umfasst. Das Sicherheitselement 302 beinhaltet die Informationsflächen 304a und 306a, die analog zu den Informationsflächen 102 und 104 bzw. 202 und 204 gestaltet sein können.

**Fig. 3b** zeigt schematisch einen Schnitt durch ein Wertdokument, entlang einer Schnittlinie I-I, wie z.B. in Fig. 3a gezeigt. Fig. 3b zeigt ein Wertdokumentsubstrat 308 mit einer ersten Hauptfläche HF₁ und einer zweiten Hauptfläche HF₂. Ein Sicherheitselement 302b, welches eine erste Informationsfläche 304b und eine zweite Informationsfläche 306b umfasst, wird auf/an der ersten Hauptfläche HF₁ des Wertdokumentsubstrats angeordnet.

**Fig. 3c** zeigt eine Schnittansicht eines Wertdokuments 300 entlang einer Schnittlinie I-I, wie es gemäß einem alternativen Ausführungsbeispiel aussehen könnte. Ein Wertdokumentsubstrat 308 umfasst eine erste Hauptfläche HF₁ und eine zweite Hauptfläche HF₂ sowie ein Sicherheitselement 302c, welches dem Sicherheitselement 302a entsprechen könnte. Das Sicherheitselement 302c umfasst eine erste Informationsfläche 304c und eine zweite Informationsfläche 306c. Im Gegensatz zu der Ausführungsform gemäß Fig. 3b ist bei der Ausführungsform gemäß Fig. 3c das Sicherheitselement 302c in das Wertdokumentsubstrat eingebettet, so dass die Informationsflächen 304c und 306c in/über bzw. auf einer Hauptfläche des Wertdokumentsubstrats 308 aufgebracht sind. Beispielsweise kann ein erstes Trägersubstrat (nicht gezeigt), welches die erste Informationsfläche 304c trägt, in das Wertdokumentsubstrat 308 papiermacherisch eingebracht sein. Analoges kann auf die zweite Informationsfläche 306c zutreffen. In diesem Fall ist das Sicherheitselement 302c zweiteilig ausgestaltet. Alternativ kann das Wertdokumentsubstrat 308 ein synthetisches Polymer sein, welches in dem Bereich der ersten und der zweiten Informationsfläche 304c, 306c zumindest teilweise transluzent ist, und wobei die erste und die zweite Informationsfläche 304c, 306c auf zumindest einer der Hauptflächen des Wertdokumentsubstrats 308 vorgesehen wird.

**Fig. 4a** zeigt einen Ausschnitt einer Rolle bzw. Endlosmaterials 400, welche(s) ein Trägersubstrat 402 umfasst, auf dem eine Reihe von Subwellenlängenanordnungen einer ersten Informationsfläche 404 und eine Reihe von Subwellenlängenanordnungen einer zweiten Informationsfläche 406 erzeugt wurden. Zur Weiterverarbeitung wird das Trägersubstrat 402 in Bahnen zerteilt, wobei Bahnen erzeugt werden, die Subwellenlängenanordnungen der ersten Informationsflächen 404 umfassen, und Bahnen, die Subwellenlängenanordnungen der zweiten Informationsflächen 406 umfassen.

**Fig. 4b** zeigt einen Ausschnitt einer Bahn 408, die eine Vielzahl erster Informationsflächen 404 trägt, und eine Bahn 410, die eine Vielzahl von zweiten Informationsflächen 406 trägt.

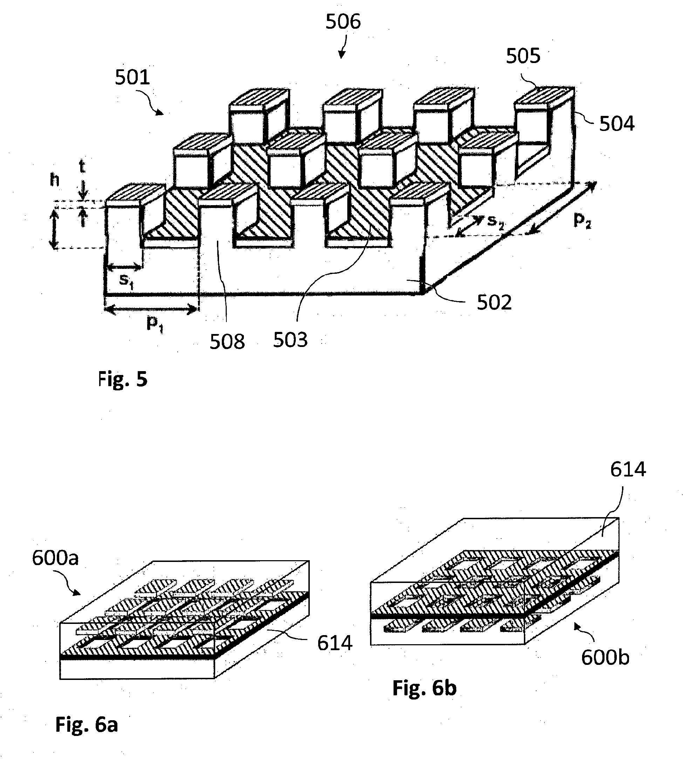

**Fig. 5** zeigt ein zweitdimensionales periodisches Gitter 501, das als Subwellenlängenanordnungen verwendet werden kann. Das Gitter 501 ist dadurch hergestellt, dass eine Prägeschicht 502 mit einem Profil versehen wird, das senkrechte Flanken besitzt. Das Profil ist so ausgebildet, dass an einer Oberseite der Prägeschicht 502 ein Muster 506 von Säulen 504 gebildet ist. Die Prägeschicht 502 ist aus einem Dielektrikum und wurde mit einer Metallschicht beschichtet, die sich in einer Grundschicht 503 auf der Oberfläche des der Prägeschicht 502 sowie in einer Beschichtung 505 auf den Säulen 504 ablegt. Aufgrund der senkrechten Flanken sind diese nicht beschichtet.

Grundsätzlich ist das Gitter 501 so ausgebildet, dass es im Durchlichtbetrieb nicht vollständig opak ist, also zu einem gewissen Grad lichtdurchlässig bleibt. Die Schichtdicke t der Metallschicht ist deshalb ebenso wie das Material entsprechend gewählt.

Im Muster 506 sind die Säulen 504, die hier lediglich exemplarisch als quaderförmig ausgebildet sind und u. a. zylindrische (nicht notwendigerweise kreiszylindrische) Erhebungen sein können, in Form eines zweidimensional periodischen Gitters angeordnet, wobei entlang zweier senkrecht zueinander liegender Richtungen in der durch die Grundschicht 503 definierten Gitterebene das Gitter 501 Periodizitäten p₁ und p₂ vorhanden sind. Die Ausdehnungen der Säulen 504 bzw. der Erhebungen in der Grundebene sind mit s₁ und s₂ bezeichnet. Die Grundschicht 503 wie auch die Beschichtungen 505 haben eine Schichtdicke t. Die im Muster 506 angeordneten Beschichtungen 505 sind durch die Höhe h der Säulen 504 um den Abstand h - t von der Oberseite der Grundschicht 503 beabstandet. Die Säulenhöhe h der profilierten Prägeschicht 502 ist dabei größer als die Schichtdicke t, so dass die Metallschicht unterbrochen ist und die Beschichtungen 505 nicht zusammenhängen. Es entsteht damit eine Metallstruktur, die aus der Grundschicht 503 besteht, welche die Gitterebene definiert, mit Löchern 508 über denen sich die Beschichtungen 505 befinden. Der Abstand zwischen den Beschichtungen 505 und der Grundschicht 503 ist dabei durch die dielektrischen Säulen 504 bewirkt.

Die Periodizitäten p₁ und p₂ liegen bevorzugt im Bereich zwischen 100 nm und 1000 nm, bevorzugt zwischen 200 nm und 500 nm. Die Füllfaktoren s₁/p₁ und s₂/p₂ liegen zwischen größer 0,2 und 0,8, bevorzugt unter 0,7. Um eine polarisationsunabhängige Farbfilterung zu erzielen, werden die Profilparameter für die beiden Raumrichtungen möglichst identisch gewählt, also p₁ = p₂ und s₁ = s₂. Dies ist jedoch optional. Ebenso sind im beschriebenen Ausführungsbeispiel die Periodizitätsrichtungen senkrecht zueinander. Auch dies ist optional. Auch räumlich asymmetrische Anordnungen des Profils und der Periodizität sind denkbar. Mit anderen Worten, das Muster 506 muss nicht, wie in Fig. 5 dargestellt, ein kartesisches Muster sein. Auch können die Säulen 504 asymmetrisch gestaltet sein.

In einer Weiterbildung kann das Gitter 501 in ein Einbett-Dielektrikum eingebettet sein. Dies hat Anwendungsvorteile, da die Oberfläche der Gittergrundstruktur 501 dann eben ist.

Fig. 6a zeigt einen Ausschnitt einer ersten Informationsfläche, insbesondere einer ersten Subwellenlängenanordnung 600a, die auf einem Trägersubstrat 614 angeordnet ist.

**Fig. 6b** zeigt einen Ausschnitt einer zweiten Informationsfläche, insbesondere einer zweiten Subwellenlängenanordnung 600b, die ebenfalls auf dem Trägersubstrat 614 angeordnet ist.

Gemäß den Figuren 6a und 6b sind die erste Subwellenlängenanordnung 600a und die zweite Subwellenlängenanordnung 600b auf verschiedenen Hauptflächen des Trägersubstrats 614 angeordnet.

Insbesondere vorzugsweise kann gemäß einer anderen Ausführungsform vorgesehen sein, dass beide, nämlich die erste Subwellenlängenanordnung 600a und auch die zweite Subwellenlängenanordnung 600b auf der gleichen Hauptfläche beispielsweise der ersten Hauptfläche des Trägersubstrats 614 angeordnet werden. Dies kann beispielsweise dadurch erzeugt werden, dass eine Prägeschicht auf die erste Hauptfläche des Trägersubstrats 614 aufgebracht wird. Die Prägeschicht wird in einen ersten Bereich mit einer Struktur versehen, die der Struktur der ersten Subwellenlängenanordnung 600a entspricht und in einen zweiten Bereich mit einer Struktur versehen, die der Struktur der zweiten Subwellenlängenanordnung 600b entspricht. In anderen Worten wird in dem zweiten Bereich die inverse Struktur des ersten Bereichs verprägt. Anschließend werden die beiden Bereiche mit einer Metallschicht, wie in Fig. 6a, 6b gezeigt versehen.

Beispielsweise können die Subwellenlängenanordnung 600a und Subwellenlängenanordnung 600b, wie in Fig. 1b gezeigt, auf dem Trägersubstrat 614 angeordnet sein.

### Bezugszeichenliste

- 100, 200, 302: Sicherheitselement
- 102, 202, 304, 404: erste Informationsfläche
- 104, 204, 306, 406: zweite Informationsfläche
- 114, 214, 308: Trägersubstrat
- 110, 112, 210, 212: Bereich mit Subwellenlängenanordnung
- 300: Wertdokument
- 308, 408: Wertdokumentsubstrat
- HF: Hauptfläche

## Patentansprüche

1. Sicherheitselement (100, 200) mit
- einer ersten Informationsfläche (102, 202), die eine erste Darstellung beinhaltet, wobei zumindest eine erste Subwellenlängenanordnung einen farbigen Bereich (110, 210) in der Darstellung bereitstellt, und
- einer zweiten Informationsfläche (104, 204), die eine zweite Darstellung beinhaltet, wobei zumindest eine zweite Subwellenlängenanordnung einen farbigen Bereich (210,212) in der Darstellung bereitstellt,
wobei die Informationsflächen (102,202; 104,204) separat nebeneinander angeordnet sind, und
- bei Betrachtung der Informationsflächen (102,202; 104,204) im Auflicht die erste Subwellenlängenanordnung und die zweite Subwellenlängenanordnung im Wesentlichen voneinander verschiedene Farben aufweisen und
- bei Betrachtung der Informationsflächen (102,202; 104,204) im Durchlicht die erste Subwellenlängenanordnung und die zweite Subwellenlängenanordnung im Wesentlichen die gleichen Farben aufweisen, wobei die erste Darstellung und die zweite Darstellung - unabhängig von der Betrachtungsseite - im Auflicht und im Durchlicht erkennbar sind, und
die Subwellenlängenanordnungen zweidimensional periodische, farbfilternde Gitter sind.

2. Sicherheitselement (100, 200) nach Anspruch 1, wobei zumindest die erste Subwellenlängenanordnung und die zweite Subwellenlängenanordnung in entgegengesetzte Richtungen ausgerichtet sind.

3. Sicherheitselement (100, 200) nach einem oder mehreren der Ansprüche 1 bis 2, wobei die erste Informationsfläche (102, 202) zusätzlich zu der ersten Subwellenlängenanordnung weitere voneinander verschiedene Subwellenlängenanordnungen aufweist, und
die zweite Informationsfläche (104, 204) zusätzlich zu der zweiten Subwellenlängenanordnung weitere voneinander verschiedene Subwellenlängenanordnungen aufweist,
und die weiteren voneinander verschiedenen Subwellenlängenanordnungen der ersten Informationsfläche und der zweiten Informationsfläche bei Betrachtung im Auflicht im Wesentlichen voneinander verschiedene Farben aufweisen und bei Betrachtung im Durchlicht im Wesentlichen die gleiche Farbe aufweisen.

4. Sicherheitselement (100, 200) nach einem oder mehreren der Ansprüche 1 bis 3, wobei die erste Darstellung und die zweite Darstellung gleiche Konturverläufe aufweisen, und bei Betrachtung im Durchlicht die erste Darstellung und die zweite Darstellung die gleichen Farben aufweisen, und bei Betrachtung im Auflicht die erste Darstellung und die zweite Darstellung voneinander verschiedene Farben aufweisen.

5. Sicherheitselement (100, 200) nach einem oder mehreren der Ansprüche 1 bis 3, wobei die erste Darstellung und die zweite Darstellung voneinander verschiedene Konturverläufe aufweisen, und bei Betrachtung im Durchlicht die erste Darstellung und die zweite Darstellung die gleichen Farben aufweisen, und bei Betrachtung im Auflicht die erste Darstellung und die zweite Darstellung voneinander verschiedene Farben aufweisen.

6. Sicherheitselement (100, 200) nach einem oder mehreren der Ansprüche 1 bis 5, wobei das Sicherheitselement ein Trägersubstrat (114) umfasst, welches eine erste und eine zweite Hauptfläche aufweist, die einander gegenüberstehen, die erste Subwellenlängenanordnung auf der ersten Hauptfläche (HF1) angeordnet ist, und die zweite Subwellenlängenanordnung auf der zweiten Hauptfläche (HF2) angeordnet ist oder die erste Subwellenlängenanordnung und die zweite Subwellenlängenanordnung auf der gleichen Hauptfläche angeordnet sind.

7. Sicherheitselement (100, 200) nach einem oder mehreren der Ansprüche 1 bis 6, wobei das Sicherheitselement eine Prägeschicht und eine Metallisierung für die erste Subwellenlängenanordnung aufweist; und eine Prägeschicht und eine Metallisierung für die zweite Subwellenlängenanordnung aufweist; oder das Sicherheitselement eine Prägeschicht und eine Metallisierung für die erste Subwellenlängenanordnung und die zweite Subwellenlängenanordnung aufweist.

8. Sicherheitselement (100, 200) nach einem der Ansprüche 1 bis 5, **dadurch gekennzeichnet, dass** die separate Anordnung dadurch gebildet ist dass:
- die beiden Darstellungen jeweils einen Hintergrundbereich (106, 108; 206, 208) umfassen, wobei die beiden Hintergrundbereiche (106, 108; 206, 208) separat nebeneinander angeordnet sind; und/oder
- die beiden Subwellenlängenanordnungen jeweils eine Prägeschicht und eine Metallschicht umfassen; und/oder
- die beiden Informationsflächen (102,202; 104,204) auf gegenüberstehenden Hauptflächen (HF1, HF2) eines Trägersubstrates angeordnet sind.

9. Wertdokument (300), insbesondere Banknote, mit einem Wertdokumentsubstrat (308), das eine erste Hauptfläche und eine zweite Hauptfläche aufweist, wobei sich die ersten und die zweite Hauptfläche gegenüberstehen, und zumindest einem Sicherheitselement (302a) nach einem oder mehreren der Ansprüche 1 bis 8.

10. Wertdokument (300) nach Anspruch 9, wobei die erste Hauptfläche die Vorderseite und die zweite Hauptfläche die Rückseite des Wertdokuments bildet und die erste Subwellenlängenanordnung auf der Vorderseite angeordnet ist und die zweite Subwellenlängenanordnung auf der Rückseite angeordnet ist.

11. Wertdokument (300) nach zumindest einem der Ansprüche 9 oder 10, wobei die erste Informationsfläche in einem ersten Fenster und die zweite Informationsfläche in einem zweiten Fenster angeordnet sind.

12. Wertdokument (300) nach Anspruch 11, wobei das Sicherheitselement zwei voneinander separate Trägersubstrate umfasst, wobei das erste Trägersubstrat die erste Informationsfläche aufweist und das zweite Trägersubstrat die zweite Informationsfläche aufweist.

13. Wertdokument (300) nach zumindest einem der Ansprüche 10 bis 12, wobei das Wertdokumentsubstrat (308) das Trägersubstrat für die erste und den zweite Informationsfläche (304b, 306b) ist.

14. Verfahren zur Herstellung eines Sicherheitselements (100, 200) gemäß einem der Ansprüche 1 bis 8 umfassend die Schritte:
- Bereitstellen eines Trägersubstrats (402);
- Erzeugen einer Reihe von Subwellenlängenanordnungen einer ersten Informationsfläche (404) auf dem Trägersubstrat (402);
- Erzeugen einer Reihe von Subwellenlängenanordnungen einer zweiten Informationsfläche (406) auf dem Trägersubstrat (402); und
- Applizieren der ersten Informationsfläche (404) und der zweiten Informationsfläche (406) auf einem Wertdokumentsubstrat, wobei
die Subwellenlängenanordnungen zweidimensional periodische, farbfilternde Gitter sind.

15. Verfahren nach Anspruch 14, wobei das Verfahren in einem Rolle-zu-Rolle-Verfahren durchgeführt wird und/oder einen oder mehrere der nachstehenden Schritte aufweist
- Teilen des Trägersubstrats in mindestens zwei Bahnen (408, 410), wobei eine Bahn (408) die Subwellenlängenanordnungen einer ersten Informationsfläche (404) umfasst, und die andere Bahn (410) die Subwellenlängenanordnungen einer zweiten Informationsfläche (406) umfasst;
- Applizieren einer ersten Informationsfläche auf einer Hauptfläche eines Wertdokumentsubstrats (308); und
- Applizieren einer zweiten Informationsfläche auf einer Hauptfläche des gleichen Wertdokumentsubstrats (308).

## Claims

1. A security element (100, 200) having
- a first information area (102, 202) containing a first representation, wherein at least a first sub-wavelength arrangement supplies a colored region (110, 210) in the representation, and
- a second information area (104, 204) containing a second representation, wherein at least a second sub-wavelength arrangement supplies a colored region (210, 212) in the representation,
wherein the information areas (102, 202; 104, 204) are arranged separately next to each other, and
- when the information areas (102, 202; 104, 204) are viewed in incident light, the first sub-wavelength arrangement and the second sub-wavelength arrangement have substantially mutually different colors and
- when the information areas (102, 202; 104, 204) are viewed in transmitted light, the first sub-wavelength arrangement and the second sub-wavelength arrangement have substantially the same colors, wherein the first representation and the second representation are recognizable in incident light and in transmitted light - independently of the viewing side -, and the sub-wavelength arrangements are two-dimensionally periodic, color-filtering gratings.

2. The security element (100, 200) according to claim 1, wherein at least the first sub-wavelength arrangement and the second sub-wavelength arrangement are aligned in opposite directions.

3. The security element (100, 200) according to one or several of claims 1 to 2, wherein the first information area (102, 202) has further, mutually different sub-wavelength arrangements in addition to the first sub-wavelength arrangement, and the second information area (104, 204) has further, mutually different sub-wavelength arrangements in addition to the second sub-wavelength arrangement,
and the further mutually different sub-wavelength arrangements of the first information area and of the second information area have substantially mutually different colors when viewed in incident light and have substantially the same color when viewed in transmitted light.

4. The security element (100, 200) according to one or several of claims 1 to 3, wherein the first representation and the second representation have the same contour shapes, and the first representation and the second representation have the same colors when viewed in transmitted light, and the first representation and the second representation have mutually different colors when viewed in incident light.

5. The security element (100, 200) according to one or several of claims 1 to 3, wherein the first representation and the second representation have mutually different contour shapes, and the first representation and the second representation have the same colors when viewed in transmitted light, and the first representation and the second representation have mutually different colors when viewed in incident light.

6. The security element (100, 200) according to one or several of claims 1 to 5, wherein the security element comprises a carrier substrate (114) having a first and a second main area disposed opposite one another, the first sub-wavelength arrangement is arranged on the first main area (HF1), and the second sub-wavelength arrangement is arranged on the second main area (HF2) or the first sub-wavelength arrangement and the second sub-wavelength arrangement are arranged on the same main area.

7. The security element (100, 200) according to one or several of claims 1 to 6, wherein the security element has an embossed layer and a metallization for the first sub-wavelength arrangement; and has an embossed layer and a metallization for the second sub-wavelength arrangement; or the security element has an embossed layer and a metallization for the first sub-wavelength arrangement and the second sub-wavelength arrangement.

8. The security element (100, 200) according to any of claims 1 to 5, **characterized in that** the separate arrangement is formed by:
- the two representations each comprising a background region (106, 108; 206, 208), wherein the two background regions (106, 108; 206, 208) are arranged separately next to each other; and/or
- the two sub-wavelength arrangements each comprising an embossed layer and a metal layer; and/or
- the two information areas (102, 202; 104, 204) being arranged on opposite main areas (HF1, HF2) of a carrier substrate.

9. A value document (300), in particular a banknote, having a value document substrate (308) which has a first main area and a second main area, wherein the first and the second main area are disposed opposite one another, and at least one security element (302a) according to one or several of claims 1 to 8.

10. The value document (300) according to claim 9, wherein the first main area forms the front side and the second main area forms the back side of the value document, and the first sub-wavelength arrangement is arranged on the front side and the second sub-wavelength arrangement is arranged on the back side.

11. The value document (300) according to at least one of claims 9 or 10, wherein the first information area is arranged in a first window and the second information area is arranged in a second window.

12. The value document (300) according to claim 11, wherein the security element comprises two mutually separate carrier substrates, wherein the first carrier substrate has the first information area and the second carrier substrate has the second information area.

13. The value document (300) according to at least one of claims 10 to 12, wherein the value document substrate (308) is the carrier substrate for the first and the second information area (304b, 306b).

14. A method for manufacturing a security element (100, 200) according to any of claims 1 to 8, comprising the steps of:
- supplying a carrier substrate (402);
- producing a number of sub-wavelength arrangements of a first information area (404) on the carrier substrate (402);
- producing a number of sub-wavelength arrangements of a second information area (406) on the carrier substrate (402); and
- applying the first information area (404) and the second information area (406) to a value document substrate, wherein
the sub-wavelength arrangements are two-dimensionally periodic, color-filtering gratings.

15. The method according to claim 14, wherein the method is carried out in a roll-to-roll process and/or has one or several of the following steps of
- dividing the carrier substrate into at least two webs (408, 410), wherein one web (408) comprises the sub-wavelength arrangements of a first information area (404), and the other web (410) comprises the sub-wavelength arrangements of a second information area (406);
- applying a first information area to a main area of a value document substrate (308); and
- applying a second information area to a main area of the same value document substrate (308).

## Revendications

1. Elément de sécurité (100, 200) comprenant
- une première surface d'information (102, 202) qui comporte une première représentation, cependant qu'au moins un premier agencement sub-longueur d'onde met à disposition une zone colorée (110, 210) dans la représentation, et
- une deuxième surface d'information (104, 204) qui comporte une deuxième représentation, cependant qu'au moins un deuxième agencement sub-longueur d'onde met à disposition une zone colorée (210, 212) dans la représentation,
cependant que les surfaces d'information (102,202; 104,204) sont agencées séparément l'une à côté de l'autre, et
- lors d'une observation des surfaces d'information (102,202; 104,204) en lumière incidente, le premier agencement sub-longueur d'onde et le deuxième agencement sub-longueur d'onde présentent essentiellement des couleurs différentes les unes des autres, et
- lors d'une observation des surfaces d'information (102,202; 104,204) en lumière transmise, le premier agencement sub-longueur d'onde et le deuxième agencement sub-longueur d'onde présentent essentiellement les mêmes couleurs, cependant que
la première représentation et la deuxième représentation sont - indépendamment du côté d'observation - reconnaissables en lumière incidente et en lumière transmise, et
les agencements sub-longueur d'onde sont des grilles bidimensionnelles périodiques filtrant la couleur.

2. Elément de sécurité (100, 200) selon la revendication 1, cependant qu'au moins le premier agencement sub-longueur d'onde et le deuxième agencement sub-longueur d'onde sont orientés dans des directions opposées.

3. Elément de sécurité (100, 200) selon une ou plusieurs des revendications de 1 à 2, cependant que la première surface d'information (102, 202) comporte, en plus du premier agencement sub-longueur d'onde, d'autres agencements sub-longueur d'onde différents les uns des autres, et
que la deuxième surface d'information (104, 204) comporte, en plus du deuxième agencement sub-longueur d'onde, d'autres agencements sub-longueur d'onde différents les uns des autres,
et que les autres agencements sub-longueur d'onde différents les uns des autres de la première surface d'information et de la deuxième surface d'information présentent, lors d'une observation en lumière incidente, essentiellement des couleurs différentes les unes des autres, et, lors d'une observation en lumière transmise, essentiellement la même couleur.

4. Elément de sécurité (100, 200) selon une ou plusieurs des revendications de 1 à 3, cependant que la première représentation et la deuxième représentation présentent des mêmes tracés de contour, et que, lors d'une observation en lumière transmise, la première représentation et la deuxième représentation présentent les mêmes couleurs, et, lors d'une observation en lumière incidente, la première représentation et la deuxième représentation présentent des couleurs différentes les unes des autres.

5. Elément de sécurité (100, 200) selon une ou plusieurs des revendications de 1 à 3, cependant que la première représentation et la deuxième représentation présentent des tracés de contour différents les uns des autres, et que, lors d'une observation en lumière transmise, la première représentation et la deuxième représentation présentent les mêmes couleurs, et, lors d'une observation en lumière incidente, la première représentation et la deuxième représentation présentent des couleurs différentes les unes des autres.

6. Elément de sécurité (100, 200) selon une ou plusieurs des revendications de 1 à 5, cependant que l'élément de sécurité comprend un substrat porteur (114) qui comporte une première et une deuxième surface principale opposées l'une à l'autre, que le premier agencement sub-longueur d'onde est agencé sur la première surface principale (HF1) et le deuxième agencement sub-longueur d'onde est agencé sur la deuxième surface principale (HF2), ou que le premier agencement sub-longueur d'onde et le deuxième agencement sub-longueur d'onde sont agencés sur la même surface principale.

7. Elément de sécurité (100, 200) selon une ou plusieurs des revendications de 1 à 6, cependant que l'élément de sécurité comporte une couche de gaufrage et une métallisation pour le premier agencement sub-longueur d'onde ; et une couche de gaufrage et une métallisation pour le deuxième agencement sub-longueur d'onde ; ou que l'élément de sécurité comporte une couche de gaufrage et une métallisation pour le premier agencement sub-longueur d'onde et le deuxième agencement sub-longueur d'onde.

8. Elément de sécurité (100, 200) selon une des revendications de 1 à 5, **caractérisé en ce que** l'agencement séparé est constitué **en ce que** :
- les deux représentations comprennent respectivement une zone d'arrière-plan (106, 108; 206, 208), cependant que les deux zones d'arrière-plan (106, 108; 206, 208) sont agencées séparément l'une à côté de l'autre ; et/ou
- les deux agencements sub-longueur d'onde comprennent respectivement une couche gaufrée et une couche métallique ; et/ou
- les deux surfaces d'information (102,202; 104,204) sont agencées sur des surfaces principales (HF1, HF2) d'un substrat porteur.

9. Document de valeur (300), en particulier billet de banque, comprenant un substrat de document de valeur (308) qui comporte une première surface principale et une deuxième surface principale, cependant que la première surface principale et la deuxième surface principale sont opposées entre elles, et au moins un élément de sécurité (302a) selon une ou plusieurs des revendications de 1 à 8.

10. Document de valeur (300) selon la revendication 9, cependant que la première surface principale constitue la face avant et la deuxième surface principale constitue la face arrière du document de valeur, et le premier agencement sub-longueur d'onde est agencé sur la face avant et le deuxième agencement sub-longueur d'onde est agencé sur la face arrière.

11. Document de valeur (300) selon au moins une des revendications 9 ou 10, cependant que la première surface d'information est agencée dans une première fenêtre et la deuxième surface d'information est agencée dans une deuxième fenêtre.

12. Document de valeur (300) selon la revendication 11, cependant que l'élément de sécurité comprend deux substrats porteurs séparés l'un de l'autre, cependant que le premier substrat porteur comporte la première surface d'information et le deuxième substrat porteur comporte la deuxième surface d'information.

13. Document de valeur (300) selon au moins une des revendications de 10 à 12, cependant que le substrat de document de valeur (308) est le substrat porteur pour la première et la deuxième surface d'information (304b, 306b).

14. Procédé de fabrication d'un élément de sécurité (100, 200) selon une des revendications de 1 à 8, comprenant les étapes :
- mise à disposition d'un substrat porteur (402) ;
- génération d'une série d'agencements sub-longueur d'onde d'une première surface d'information (404) sur le substrat porteur (402) ;
- génération d'une série d'agencements sub-longueur d'onde d'une deuxième surface d'information (406) sur le substrat porteur (402) ; et
- application de la première surface d'information (404) et de la deuxième surface d'information (406) sur un substrat pour document de valeur, cependant que les agencements sub-longueur d'onde sont des grilles bidimensionnelles périodiques filtrant la couleur.

15. Procédé selon la revendication 14, cependant que le procédé est exécuté dans un procédé de rouleau à rouleau et/ou comporte une ou plusieurs des étapes ci-après
- division du substrat porteur en au moins deux bandes (408, 410), cependant qu'une bande (408) comprend les agencements sub-longueur d'onde d'une première surface d'information (404) et que l'autre bande (410) comprend les agencements sub-longueur d'onde d'une deuxième surface d'information (406) ;
- application d'une première surface d'information sur une surface principale d'un substrat pour document de valeur (308) ; et
- application d'une deuxième surface d'information sur une surface principale du même substrat pour document de valeur (308).
